# EUROPÄISCHE PATENTANMELDUNG

(11) **EP 0 556 723 A2**
(43) Veröffentlichungstag der Anmeldung: **25.08.1993**
(21) Anmeldenummer: 93102152.1
(22) Anmeldetag: 11.02.1993
(51) Int. Cl.: C08L 67/04, C08L 83/04, C08G 63/685, C08L 77/12

(54) **Mischungen aus flüssigkristallinen Copolymeren und Siliconelastomeren sowie deren Verwendung**

(30) Priorität: 19.02.1992 DE 4205003
(71) Anmelder: HOECHST AKTIENGESELLSCHAFT, D-65926 Frankfurt am Main (DE)
(72) Erfinder: Romer, Michael, Dr., W-6080 Gross-Gerau (DE); Schleicher, Andreas, Dr., W-6141 Einhausen (DE)

(57) **Zusammenfassung**

Mischungen aus A) flüssigkristallinen Copolymeren und B) Siliconelastomeren, mit einem Anteil an A) von 50 bis 99 Gew.-% und einem Anteil an B) von 1 bis 50 Gew.-% besitzen eine verbesserte Reißdehnung.

Sie eignen sich besonders gut zur Herstellung von Formkörpern oder als Matrixmaterial für Verbundwerkstoffe.

## Beschreibung

Die Erfindung betrifft Mischungen aus flüssigkristallinen Copolymeren und Siliconelastomeren, die eine verbesserte Reißdehnung aufweisen, sowie deren Verwendung zur Herstellung von Formkörpern.

Die Synthese und Eigenschaften flüssigkristalliner Copolyester (LCP) und Copolyesteramide sind Gegenstand einer Vielzahl von Veröffentlichungen. Ein gängiges Verfahren zu ihrer Herstellung ist die Schmelzkondensation der Ausgangverbindungen, wodurch eine hohe Reinheit und ein hohes Molekulargewicht der Polymere gewährleistet wird (US-A-4,161,470; US-A-3,637,595).

In jüngster Zeit hat das Interesse an flüssigkristallinen Polyestern zugenommen, wie das Erscheinen einer Reihe von Publikationen zeigt (EP-A-0 394 813; EP-A-0 390 489). Alle diese Veröffentlichungen weisen auf die außergewöhnlichen mechanischen und rheologischen Eigenschaften der Materialien hin. Hervorzuheben sind dabei insbesondere ihre hohen Werte des Elastizitätsmoduls sowie die hervorragenden Fließfähigkeiten bei hohen Scherraten. Dagegen findet man bei flüssigkristallinen Polymeren geringe Reißdehnungswerte, wodurch sie in einigen Anwendungsgebieten nicht einsetzbar sind. Es besteht daher ein großes Interesse, solche Materialien in geeigneter Art und Weise zu modifizieren.

Aus der Literatur ist bereits bekannt, daß der Zusatz von Elastomeren die Einstellung wichtiger mechanischer Eigenschaften bei Polymeren ermöglicht (H. Bucknall, "Makromol Chem.; Macromol. Symp.", Bd. 20/21, S. 425 (1988)). Aufgabe der vorliegenden Erfindung war es daher, vollaromatische flüssigkristalline Copolymere bereitzustellen, die verbesserte Reißdehnungswerte aufweisen. Gelöst wurde die Aufgabe durch den Zusatz von speziellen Siliconelastomeren.

Die Erfindung bezieht sich auf Mischungen aus A) flüssigkristallinen Copolymeren und B) Siliconelastomeren, bei denen der Anteil an A) 50 bis 99 Gew.-% und der Anteil an B) 1 bis 50 Gew.-% beträgt.

Die in den Mischungen gemäß der Erfindung eingesetzten flüssigkristallinen Polymere A) sind im allgemeinen vollaromatische Polyester, die anisotrope Schmelzen bilden und mittlere Molekulargewichte (Mw=Gewichtsmittel) von 2000 bis 200000, bevorzugt von 3500 bis 50000 und insbesondere von 4000 bis 30000 g/mol aufweisen. Eine für die Mischungen gemäß der Erfindung geeignete Klasse flüssigkristalliner Polymere ist beschrieben in US-A-4 161 470. Es handelt sich dabei um Naphthoyl-Copolyester mit wiederkehrenden Struktureinheiten der Formel I und II 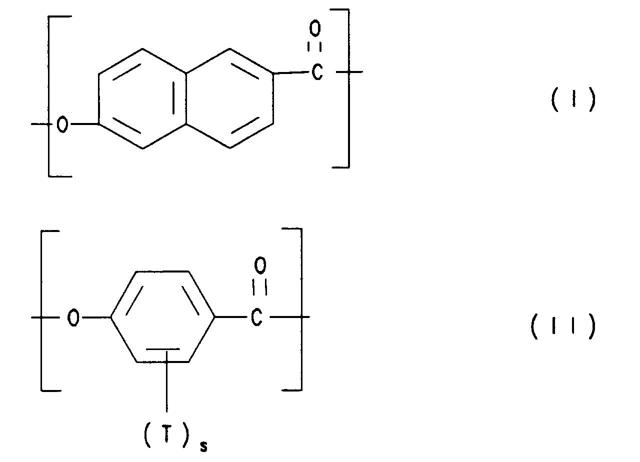
worin T ausgewählt ist aus einem Alkylrest, einem Alkoxyrest, jeweils mit 1 bis 4 Kohlenstoffatomen oder einem Halogen, vorzugsweise Chlor, Brom oder Fluor, s bedeutet Null oder eine ganze Zahl 1, 2, 3 oder 4, wobei im Falle mehrerer Reste T diese unabhängig voneinander gleich oder verschieden sind. Die Naphthoyl-Copolyester enthalten 10 bis 90, vorzugsweise 25 bis 45 Mol-% Struktureinheiten der Formel I und 90 bis 10, vorzugsweise 85 bis 55 Mol-% der Formel II.

Weitere für die Mischungen gemäß der Erfindung eingesetzte flüssigkristalline Polyester sind in EP-A-0 278 066 und US-A-3 637 595 beschrieben. Die dort angeführten Oxybenzoylcopolyester enthalten Struktureinheiten der Formeln III, IV und V, wobei jeweils ein oder mehrere genannte Struktureinheiten vorliegen können. 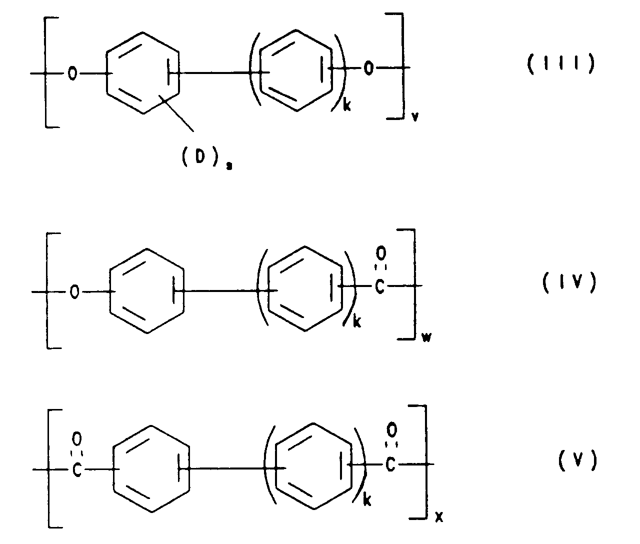
In den Formeln III, IV und V ist k Null oder 1, v, w und x sind ganze Zahlen, die gleich oder größer als 1 sind, D ist ausgewählt aus einem Alkylrest mit 1 bis 4 Kohlenstoffatomen, einem Arylrest, einem Aralkylrest mit jeweils 6 bis 10 Kohlenstoffatomen oder einem Halogen wie Fluor, Chlor oder Brom, s hat die obengenannte Bedeutung, wobei bei mehreren Resten D diese unabhängig voneinander gleich oder verschieden sind. Die Summe der Indexzahlen v, w und x weist Werte von 30 bis 600 auf. Die Oxybenzoylcopolyester enthalten im allgemeinen 0,6 bis 60, vorzugsweise 8 bis 48 Mol-% Struktureinheiten der Formel III, 0,4 bis 98,5, vorzugsweise 5 bis 85 Mol-% Struktureinheiten der Formel IV und 1 bis 60, vorzugsweise 8 bis 48 Mol-% Struktureinheiten der Formel V, wobei sich die Anteile der Struktureinheiten der Formeln III, IV und V auf 100 Mol-% ergänzen.

Für die Mischungen sind ebenfalls Copolyester geeignet, die nur Struktureinheiten der Formeln III und V enthalten. Diese flüssigkristallinen Polymere enthalten im allgemeinen 40 bis 60 Mol-% der Struktureinheiten der Formel III und 60 bis 40 Mol-% Struktureinheiten der Formel V. Bevorzugt ist hierbei ein Molverhältnis von 1 zu 1. Solche Polyester werden zum Beispiel in US-A-4 600 765; US-A-4 614 790 und US-A-4 614 791 beschrieben.

Ebenfalls geeignet sind solche Copolyester, die neben den Struktureinheiten ausgewählt aus den Formeln III bis V, auch solche der Formeln I und/oder II enthalten; z.B. mit einem Anteil an Struktureinheiten der Formel I von 15 bis 1 Mol-%, der Formel II von 50 bis 79 Mol-%, der Formel III von 20 bis 10 Mol-% und der Formel V von 20 bis 10 Mol-%.

Für die Mischungen gemäß der Erfindung sind außerdem Copolyesteramide geeignet, die neben einer oder mehreren Struktureinheiten der Formeln I bis V noch zusätzlich mindestens eine Struktureinheit der Formel VI 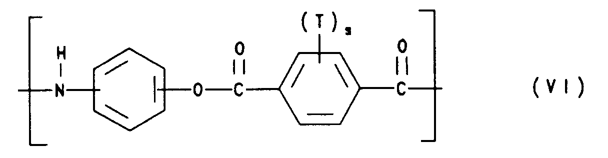
enthalten, worin T und s die bereits beschriebene Bedeutung besitzen.

Die Siliconelastomere B) sind Organosiloxane mit einem Teilchendurchmesser von 10 bis 150 nm, bevorzugt von 20 bis 110 nm und insbesondere von 70 bis 100 nm.

Eine besonders geeignete Klasse von Siliconelastomeren, d.h. -harzen ist beschrieben in EP-A-0 291 939. Sie bestehen aus bei Raumtemperatur festen Organopolysiloxanen der Formel

RₓSi(OR¹)_{y((4-x-y)/2)} (VII)

worin x bzw. y Null ist oder Werte bis 3,0 bzw. bis 2,0 aufweisen, R ist gleich oder verschieden und bedeutet Wasserstoff oder ein einwertiger aliphatischer Kohlenwasserstoffrest mit 1 bis 8 Kohlenstoffatomen oder ein Arylrest mit 6 bis 12 C-Atomen, R¹ ist gleich oder verschieden und bedeutet Wasserstoff oder ein Alkyl- oder Alkoxyalkylenrest mit jeweils 1 bis 4 Kohlenstoffatomen. Zu den beschriebenen Organopolysiloxanen werden Alkoxysilane und/oder deren Teilpolymerisate der Formel

RₓSi(OR²)₄₋ₓ (VIII)

zugegeben, wobei R die oben angegebene Bedeutung hat, R² gleich oder verschieden ist und ein Alkyl- oder Alkyloxyalkylenrest mit 1 bis 4 Kohlenstoffatomen oder ein Rest der Formel -COCH₃, -COC₂H₅ oder -CH₂CH₂OH bedeutet. x ist im Falle der Alkoxysilane eine ganze Zahl 1, 2 oder 3, bei den Teilpolymerisaten dagegen die oben angeführte Definition.

Der Anteil an Siliconharz B) in den Mischungen beträgt 1 bis 50 Gew.-% und bevorzugt 3 bis 35 Gew.-%; der Anteil an flüssigkristallinen Polyestern beträgt 99 bis 50 Gew.-% und bevorzugt 97 bis 65 Gew.-%., wobei sich die Anteile der beiden Komponenten auf 100 % ergänzen. Die Mischungen können ein oder mehrere Siliconharze und einen oder mehrere flüssigkristalline Polyester sowie modifizierte Siliconharze bzw. modifizierte flüssigkristalline Polyester enthalten. Sie werden durch für Thermoplasten bekannte Standardmethoden hergestellt und verarbeitet, z. B. durch Kneten, Extrusion, Pressen oder Spritzguß.

Die Mischungen können zusätzlich übliche Additive enthalten, beispielsweise thermische und UV-Stabilisatoren, Antistatika, Flammschutzmittel, Farbstoffe, Pigmente, anorganische und organische Füllstoffe, d. h. insbesondere auch verstärkende Zusätze wie Glas-, Kohle- oder Hochmodulfasern. Die Mischungen eignen sich zur Herstellung von Formkörpern, beispielsweise in Form von Platten, Fasern, Folien, Steckerleisten und Schläuchen, hergestellt nach dem Spritzguß- oder Extrusionsverfahren, insbesondere aber auch als Matrixmaterial für Verbundwerkstoffe.

Folgende Polymere wurden in dem Beispiel eingesetzt:
(A1) Flüssigkristalliner Copolyester mit wiederkehrenden Struktureinheiten der Formel 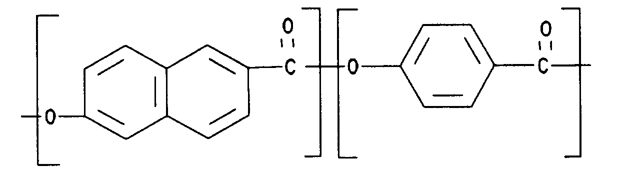 worin der Anteil der Oxynaphtoylstruktureinheiten 20 Mol% und der Anteil der Oxybenzoylstruktureinheiten 80 Mol% beträgt.

Das eingesetzte Siliconharz B) ist ein Siliconelastomeres mit 25 Mol-% Phenylsilikongruppen mit einer Primärteilchengröße von 90 nm.

Die Materialien wurden zunächst getrocknet (140°C, 24h) und anschließend in verschiedenen Gewichtsverhältnissen in einem Extruder LSM 30.34 GL der Fa. Leistritz (Nürnberg, Bundesrepublik Deutschland) unter Schutzgas (Stickstoff) bei Temperaturen von 310°C bis 340°C extrudiert und ganuliert. Die erhaltenen Granulate wurden getrocknet (140°C, 24h) und zu Formteilen wie Schulterstäben und Platten spritzgegossen und auf ihre physikalischen und thermischen Eigenschaften hin untersucht. Dazu wurden folgende Geräte verwendet:
Eine Zug-Dehnungsmaschine Typ 1455 der Fa. Zwick (Ulm, Bundesrepublik Deutschland) zur Bestimmung der Reißfestigkeit, Reißdehnung und des Zug-E-Moduls.

Eine Biege-Dehnungsmaschine Typ. 1454 der Fa. Zwick (Ulm, Bundesrepublik Deutschland) zur Bestimmung der Biegespannungen, der Randfaserdehnung und des Biege-E-Moduls.

Die Wärmeformbeständigkeit wurde nach DIN 53461 Methode A bestimmt.

### Beispiel:

Mittels des vorstehend genannten Zweischneckenextruders wurden 90 Gew.-% des flüssigkristallinen Copolyesters A1) und 10 Gew.-% des Siliconharzes B) nach intensiver Trocknung gemeinsam unter Stickstoff extrudiert und granuliert. Die Granulate wurden anschließend nach Trocknung zu Schulter- und Schlagstäben spritzgegossen. Als Vergleich wurden 100 % des Copolyesters A¹) eingesetzt. Nachstehende Tabelle zeigt die ermittelten mechanischen Eigenschaften der Formteile.

| A1 : B1 | 100 : 0 | 90 : 10 |
|---|---|---|
| Reißfestigkeit (MPa) | 155 | 131 |
| Reißdehung (%) | 3,3 | 5,0 |
| Zug-E-Modul (MPa) | 8530 | 7230 |
| Biegespannung bei 3,5 % (MPa) | 135 | 117 |
| Biegefestigkeit (MPa) | 149 | 124 |
| Randfaserdehung bei Höchstkraft | 7 | 5 |
| Biege-E-Modul (MPa) | 6920 | 6963 |
| HDT/A (°C) | 175 | 175 |

## Patentansprüche

1. Mischung aus A) flüssigkristallinen Copolymeren und B) Siliconelastomeren, dadurch gekennzeichnet, daß der Anteil an A) 50 bis 99 Gew.-% und der Anteil an B) 1 bis 50 Gew.-% beträgt.

2. Mischung nach Anspruch 1, dadurch gekennzeichnet, daß die Komponente A) ein aromatischer Polyester mit einem mittleren Molekulargericht von 200 bis 200000 oder ein Copolyesteramid ist.

3. Mischung nach Anspruch 1 oder 2, dadurch gekennzeichnet, daß die Komponente A) wiederkehrende Einheiten der Formel 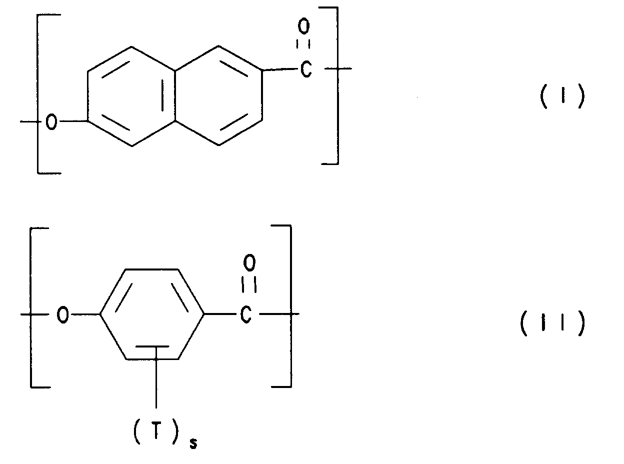 besitzt, worin T gleich oder verschieden und ausgewählt ist aus einem Alkylrest, einem Alkoxyrest, jeweils mit 1 bis 4 C-Atomen oder einem Halogen, s ist Null oder eine ganze Zahl 1, 2, 3 oder 4; das Verhältnis der Einheiten (I) und (II) beträgt 10 bis 90 zu 10 bis 90 Molprozent.

4. Mischung nach Anspruch 1 oder 2, dadurch gekennzeichnet, daß die Komponente A) mindestens zwei wiederkehrende Einheiten der Formeln 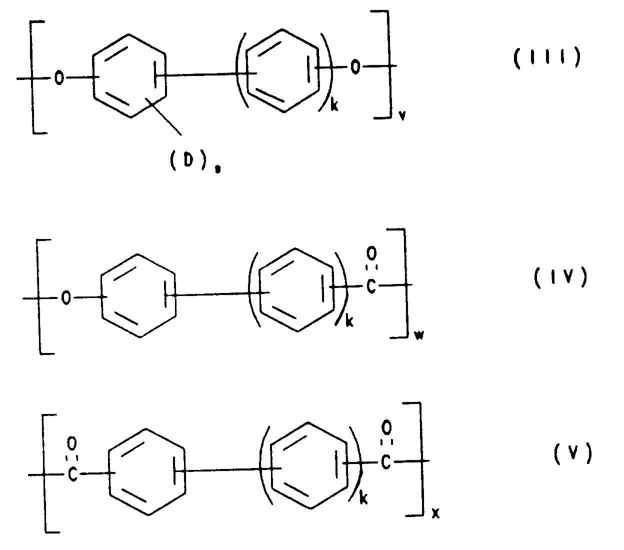 aufweist, in denen k Null oder 1 ist, v, w und x sind ganze Zahlen, die gleich oder größer als 1 sind, D ist gleich oder verschieden und ist ausgewählt aus einem Alkylrest mit 1 bis 4 C-Atomen, einem Arylrest, einem Aralkylrest, jeweils mit 6 bis 10 C-Atomen oder einem Halogen.

5. Mischung nach Anspruch 4, dadurch gekennzeichnet, daß die Summe der Indexzahlen v, w und x 30 bis 600 beträgt und der Anteil der Einheiten 0,6 bis 60 Mol-% (III), 0,4 bis 98,5 Mol-% (IV) und 1 bis 60 Mol-% (V) ist, bezogen auf 100 Mol-%.

6. Mischung nach Anspruch 4 oder Anspruch 5, dadurch gekennzeichnet, daß die Komponente A) aus 40 bis 60 Mol-% der Einheiten (III) und 40 bis 60 Mol-% der Einheiten (V) besteht.

7. Mischung nach einem oder mehreren der Ansprüche 1 bis 6, dadurch gekennzeichnet, daß die Komponente A) neben den ausgewählten Einheiten aus (III) bis (V) auch solche der Einheiten (I) und/oder (II) enthält.

8. Mischung nach einem oder mehreren der Ansprüche 1 bis 7, dadurch gekennzeichnet, daß die Komponente A) neben Einheiten (I) bis (V) zusätzlich die Struktureinheit 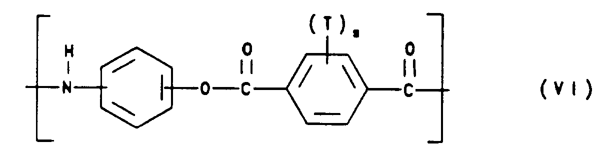 enthält, worin T und s die obengenannte Bedeutung haben.

9. Mischung nach einem oder mehreren der Ansprüche 1 bis 8, dadurch gekennzeichnet, daß die Komponente A) die Struktureinheiten enthält: (I) 1 bis 15 Mol-%, (II) 50 bis 79 Mol-%, (III) 10 bis 20 Mol-% und (V) 10 bis 20 Mol-%, wobei die Summe aller Einheiten stets 100 Mol-% ist.

10. Mischung nach einem oder mehreren der Ansprüche 1 bis 9 dadurch gekennzeichnet, daß die Komponente B) aus a) Organopolysiloxanen der Formel
RₓSi(OR¹)_{y((4-x-y)/2)} (I)
und b) Alkoxysilanen und/oder deren Teilpolymerisaten der Formel
RₓSi(OR²)₄₋ₓ (II)
bestehen,
worin R gleich oder verschieden ist und Wasserstoff oder ein einwertiger aliphatischer Kohlenwasserstoffrest mit 1 bis 8 Kohlenstoffatomen oder ein Arylrest mit 6 bis 12 C-Atomen bedeutet, R¹ ist gleich oder verschieden und bedeutet Wasserstoff oder ein Alkyl- oder Alkoxyalkylenrest mit jeweils 1 bis 4 Kohlenstoffatomen, R² ist gleich oder verschieden und stellt ein Alkyl- oder Alkyloxyalkylenrest mit 1 bis 4 Kohlenstoffatomen oder einen Rest der Formel -COCH₃, -COC₂H₅ oder -CH₂CH₂OH dar.

11. Mischung nach einem oder mehreren der Ansprüche 1 bis 10, dadurch gekennzeichnet, daß die Siliconelastomere B) einen Teilchendurchmesser von 10 bis 150 nm aufweisen.

12. Mischung nach einem oder mehreren der Ansprüche 1 bis 11, dadurch gekennzeichnet, daß sie zusätzlich übliche Additive enthält.

13. Verwendung der Mischung gemäß einem oder mehreren der Ansprüche 1 bis 12 zur Herstellung von Formkörpern oder als Matrixmaterial für Verbundwerkstoffe.
